# EUROPÄISCHE PATENTSCHRIFT

(11) **EP 1 343 644 B1**
(45) Veröffentlichungstag und Bekanntmachung des Hinweises auf die Patenterteilung: **03.08.2005**
(21) Anmeldenummer: 01985923.0
(22) Anmeldetag: 21.12.2001
(51) Int. Cl.: B60F 1/04

(54) **ZWEIWEGEFAHRZEUG ZUR DURCHFÜHRUNG VON GLEISOBERBAUARBEITEN**
RAIL-ROAD VEHICLE FOR CARRYING OUT WORKS ON TRACK SUPERSTRUCTURE
VEHICULE RAIL-ROUTE PERMETTANT D'EFFECTUER DES TRAVAUX SUR LA SUPERSTRUCTURE D'UNE VOIE

(30) Priorität: 23.12.2000 DE 10065325; 19.10.2001 DE 10152081
(43) Veröffentlichungstag der Anmeldung: 17.09.2003
(73) Patentinhaber: Scherf, Wilfried, 07768 Hummelshain (DE); Luddeneit, Michael, 07768 Hummelshain (DE)
(72) Erfinder: Scherf, Wilfried, 07768 Hummelshain (DE); Luddeneit, Michael, 07768 Hummelshain (DE)
(74) Vertreter: Bock, Gerhard
(86) Internationale Anmeldenummer: PCT/EP2001/015263
(87) Internationale Veröffentlichungsnummer: WO 2002/051657

(56) Entgegenhaltungen:
- WO-A-97/21558
- DE-B- 1 005 546
- US-A- 2 188 096
- US-A- 4 537 137

## Beschreibung

Die Erfindung betrifft ein Zweiwegefahrzeug zur Durchführung von Gleisoberbauarbeiten gemäß der Gattung der Patentansprüche. Bei einem Zweiwegefahrzeug handelt es sich um ein Fahrzeug, das sowohl auf der Straße als auch auf der Schiene benutzbar und mit entsprechenden Rädern bzw. Radpaaren versehen ist.

Bekanntlich werden in der Kraftfahrzeugtechnik Sattelzüge zum Transport großer oder langer Lasten verwendet, die sich in der Regel über den Radachsen befinden, siehe DE 32 07 582 A1, DE 34 47 094 A1. Ferner ist es bekannt, einen Eisenbahnzug aus Straßenfahrzeuganhängern dadurch zusammenzustellen, dass die als Auflieger gestalteten Anhänger auf entsprechend ausgebildete Schienenfahrgestelle aufgebracht werden, siehe DE 36 18 304 A1. Auch in diesem Fall geht es nur um den Transport von Lasten. U. U. sind die Schienenfahrgestelle als Drehgestelle ausgebildet, bei denen es auf die Lage der vertikalen Drehachse bezüglich der Radachsen des Drehgestells ankommt, siehe DE 43 16 631 A1. Aus der US 4 537 137 ist ein auf Betriebshöfen und Umschlagplätzen verwendbares kombiniertes Fahrzeug bekannt, das sowohl als Schienenfahrzeug als auch als Straßenfahrzeug im beschränkten Umfang verwendbar ist. Durch Absenkung eines Schienenradpaares erfährt das Fahrzeug eine Schrägstellung, die seine Verwendbarkeit als Schienenfahrzeug sehr einschränken. Außerdem hat das Fahreug durch die Anordnung der Schienenräder eine für den Schienentransport ungünstige Schwerpunktlage. Ferner ist es bekannt, zur Bearbeitung des Gleisoberbaues Anhänger von Schienenfahrzeugen so umzugestalten, dass sich Arbeitswagen ergeben, bei denen die wesentlichen Lasten und Arbeitsaggregate unterhalb der Radachsen befinden und die darüber hinaus Schienenwellen weitestgehend ausgleichen (DE 25 25 227 A1). Aus der DE 27 12 189 ist eine straßen- und gleisfahrbare Stopfmaschine bekannt, die beim Straßentransport an eine Zugmaschine ankuppelbar ist, bei den Stopfarbeiten aber eine selbständige Maschine bildet.

Die bisherige Anwendung der Zweiwegetechnik bei Maschinen zur Bearbeitung des Gleisoberbaus ist entweder mit einer komplizierten Aufgleisung bzw. Umsattelung der Fahrzeuge und deshalb mit einem hohen Aufwand an Leistung, Material und Zeit verbunden oder sie ist mit einer Anwendung von gebräuchlichen Anhängern verbunden, bei denen sich die Bewegungsübertragungsmittel und die Arbeitsmittel wechselseitig behindern.
Nachteilig ist weiterhin, dass nur kleine Zweiwegefahrzeuge enge Radien mit entsprechend geringer Leistung bearbeiten können.

Aufgabe der Erfindung ist es daher, ein Zweiwegefahrzeug zu schaffen, das für die Arbeitsmittel zwischen den Schienenradachsen einen großen Freiraum läßt, und das andererseits die Bearbeitung auch enger Radien (20 m und weniger) ermöglicht. Darüber hinaus sollen die zu verwendenden Massen reduziert und die Arbeitsleistung erhöht werden. Schließlich soll die Eingleisung aufwandsmäßig vereinfacht, die Eingleiszeit verkürzt, und der für die Eingleisung erforderliche Platzbedarf verringert werden.

Gemäß der Erfindung wird diese Aufgabe durch die kennzeichnenden Merkmale des ersten Patentanspruchs gelöst. Infolge der Verwendung eines Aufliegers als Arbeitsgerätewagen und seiner Kombination mit einer Zugmaschine ergibt sich unter dem Arbeitsgerätewagen ein erheblich größerer Freiraum als bei den bekannten Anordnungen zur Bearbeitung des Gleisoberbaus, bspw. Schleifen, Stopfen u. ä., bei einer gleichzeitig höheren Beweglichkeit des Fahrzeugs. Hierzu befindet sich die Aufsattelstelle des Aufliegers an der Zugmaschine vorteilhaft über oder hinter der Schienenrad-Hinterachse der Zugmaschine. Mit anderen Worten schneidet die im wesentlichen vertikale Gelenkachse von Zugmaschine und Auflieger die Schienenrad-Hinterachse oder sie läuft hinter ihr vorbei. Die hohe Beweglichkeit des erfindungsgemäßen Zweiwegefahrzeugs wird auch dadurch gewährleistet, dass die zueinander parallelen Hinterachsen des Aufliegers für Schienen- und Straßenräder gemeinsam um eine im wesentlichen vertikale Achse schwenkbar, in der Höhe aber gegeneinander, parallel zu dieser Vertikalachse zwischen zwei Endlagen verstellbar sind. Zur Vereinfachung des Eingleisvorganges können die zueinander parallelen Hinterachsen des Aufliegers für Schienen- und Straßenräder auch getrennt um die vertikale Achse drehbar angeordnet sein. Dabei ergibt sich eine einfache Lösung dadurch, dass alle Hinterachsen des Aufliegers an einem Grundgestell gelagert sind, das gegenüber dem Auflieger um die im wesentlichen vertikale Achse drehbar gelagert ist Im einzelnen sind am Grundgestell vier wenigstens annähernd vertikal gerichtete Führungen angeordnet, entlang denen ein Trägergestell verstellbar ist. An einem der eben genannten beiden Gestelle sind die Lager für die Schienenräder und am anderen der beiden genannten Gestelle die Lager für die Straßenräder angeordnet sind. Um die Wirkung von Zwangskräften zu vermeiden bzw. abzufangen, sind die im wesentlichen vertikal geichteten Führungen um Achsen schwenkbar gelagert, die wenigstens annähernd parallel zu den Hinterachsen des Aufliegers gerichtet sind. Aus dem gleichen Grunde sind die Schwenklager der im wesentlichen vertikal gerichteten Führungen über schwingungsdämpfende Mittel am Grundgestell befestigt. Vorteilhaft sind die Schienenräder, in zwei Schienenräderpaaren zusammengefasst, am Grundgestell und die Straßenräder, in einem Paar zusammengefasst, am Trägergestell gelagert. Damit eine Höhenjustierung des Straßenräderpaares in einfacher Weise erfolgen kann, sind die Straßenräder über sogenannte Innenladerachsen am Trägergestell befestigt. Das zwischen zwei Endlagen verstellbare Trägergestell ist zumindest in seiner dem Grundgestell am nächsten liegenden Endlage mit vorzugsweise mechanischen Verriegelungsmitteln arretierbar. Die Lager für die Schienenräderpaare können in das Grundgestell eingearbeitet sein. Aus Anpassungsgründen ist es jedoch günstig, wenn die Lagerkörper für die die Schienenräderpaare tragenden Wellen am Grundgestell lösbar so befestigt sind, dass der Abstand der Lagerkörper am Grundgestell entsprechend dem Abstand der Räder des zugehörigen Schienenräderpaares veränderbar ist. Die Abstandsänderung für jedes Räderpaar kann bspw. beim Spurweitenwechsel erforderlich sein und durch Auswechselung der Radwelle oder durch Ein- oder Ausfahren der als Teleskopwelle ausgebildeten Radwelle bewerkstelligt werden. Dabei ergibt sich eine stabile Lage der Lagerkörper, wenn die Lagerkörper jedes Schienenräderpaares an ihren vom Grundgestell abliegenden, freien Seiten durch einen gemeinsamen Abstandshalter verbunden sind. Die Antriebsmittel für die Schienenräderpaare können ebenso wie deren Bewegungsübertragungsmittel am Grundgestell angeordnet sein.
Bisher wurde Erfindungswesentliches zur Verbindung der Zugmaschine mit dem Auflieger und zum Fahrgestell des Zweiwegefahrzeugs ausgesagt, das sich am hinteren Ende des Aufliegers befindet. Zur Lösung der erfindungsgemäßen Aufgabe dienen aber auch gewisse Ausbildungen an der Zugmaschine und Präzisierungen in ihrer Verbindung zum Auflieger, die im Folgenden abgehandelt werden. Gemäß einem weiteren Merkmal der Erfindung ist am Zugmaschinenboden zwischen dem vorderen und dem hinteren Straßenradpaar ein Schienenradgestell für zwei ebenfalls zwischen den am Zugmaschinenboden gelagerten Straßenradpaaren befindliche Schienenradpaare vorgesehen, das vier zum Zugmaschinenboden gerichtete, zumindest annähernd parallele Führungen für vier mit dem Zugmaschinenboden verbundene Führungskörper aufweist. Es kann auch ein Schienenradpaar vor und ein Schienenradpaar hinter dem hinteren Straßenradpaar vorgesehen sein. Die Drehachsen der eben genannten Radpaare sind parallel zueinander ausgerichtet. Für die Festigkeit der Verbindung des Aufliegers mit der Zugmaschine ist es vom Vorteil, wenn die zum Zugmaschinenboden gerichteten Führungen im wesentlichen um gleiche Beträge nach vom geneigt sind, und zwar in Ebenen, die zumindest angenähert parallel zu den Radebenen bzw. rechtwinklig zu den Radachsen der Schienenräder gerichtet sind. Außerdem sind zur Vermeidung von Zwangskräften bzw. zur Dämpfung von Schwingungen die zum Boden der Zugmaschine gerichteten Führungen am Schienenradgestell in ihren Neigungsebenen schwenkbar gelagert, wobei die zugehörigen Lager über Dämpfungsmittel am Schienenradgestell befestigt sind. Ebenfalls der Vermeidung von Zwangskräften dient die schwenkbare Lagerung der vorderen, mit dem Zugmaschinenboden verbundenen Führungskörper um eine Achse, die im wesentlichen parallel zu den Radachsen der Schienenräder am Schienenradgestell gerichtet ist und über dem Schienenradgestell in etwa der Höhe des Zugmaschinenbodens liegt. Dem gleichen Zweck dienen zwei Traversen, von denen jede zwei auf derselben Seite des Schienenradgestells angeordnete Führungskörper verbindet. Die Traversen sind zumindest angenähert parallel zu den Radebenen gerichtet, und ihre Verbindungen zu den vorderen oder hinteren Führungskörpern ist lösbar.
Wie beim Aufliegerfahrgestell sind am Schienenradgestell Verriegelungsmittel vorgesehen, die bestrebt sind, die zwischen einer oberen und einer unteren Endlage bewegbaren Führungskörper zumindest in ihrer Lage nahe dem Schienenradgestell zu halten. Der Abstand der Räder jedes Schienenräderpaares ist veränderbar. Den Rädern der Schienenradpaare sind vorteilhaft Bremsmittel, wie Scheiben, Trommeln, Backen o. dgL zugeordnet. Aus Anpassungsgründen ist der Auflieger an und bezüglich der Aufsattelstelle höhenverstellbar angeordnet. Am vorderen Ende des Aufliegers, in der Nähe der Sattelstelle, sind Stabilisatoren vorgesehen, die ein Nicken dieses Aufliegerendes weitestgehend verhindern. Zur genannten Schwenkung der Schienen- und Straßenräder um die vertikale Achse zur Verschiebung der Führungsstücke entlang der Führungen in der angegebenen Weise und zur automatischen Betätigung der Rast- und Verriegelungsmittel können vorteilhaft hydraulische oder pneumatische Getriebe und Getriebesteuerungen verwendet werden.

Die Erfindung wird nachstehend an Hand der schematischen Zeichnung näher erläutert. Es zeigen:
Fig. 1 eine Seitenansicht eines erfindungsgemäßen Zweiwegefahrzeugs,
Fig. 2 die Verbindung von Zugmaschine und Auflieger in vergrößerter Darstellung,
Fig. 3 eine Grundriss-Skizze zur Darstellung der kinematischen Zusammenhänge beim Durchfahren eines Gleisbogens,
Fig. 4 eine pespektivische Explosionsdarstellung zum Fahrgestell des Aufliegers,
Fig. 5 eine perspektivische Explosivdarstellung zum Schienenfahrgestell der Zugmaschine,
Fig. 6 eine Hydrauliksteuerung,
Fig. 7 eine weitere Ausgestaltung des teilweise dargstellten Aufliegers in Ansicht,
Fig. 8 ein zu Fig. 7 gehörender Grundrissschnitt des Aufliegers und
Fig. 9 eine zu den Figuren 7 und 8 gehörende perspektivische Explosivdarstellung.

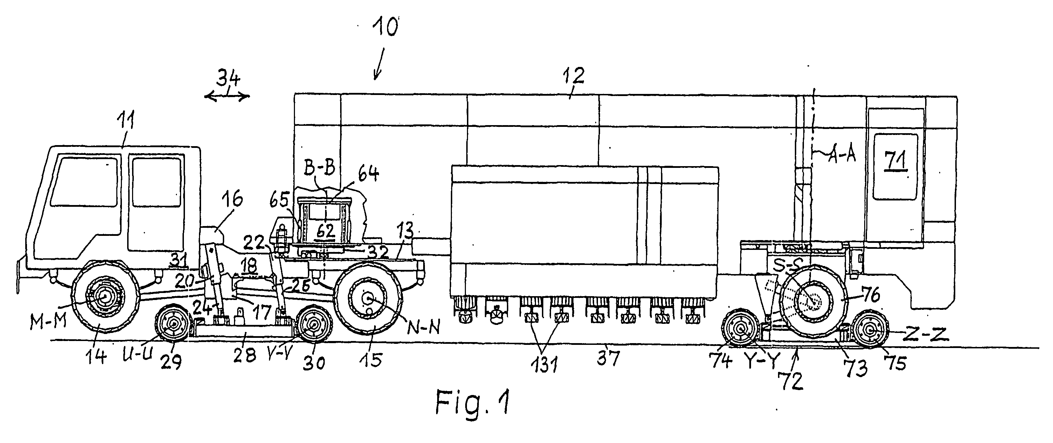

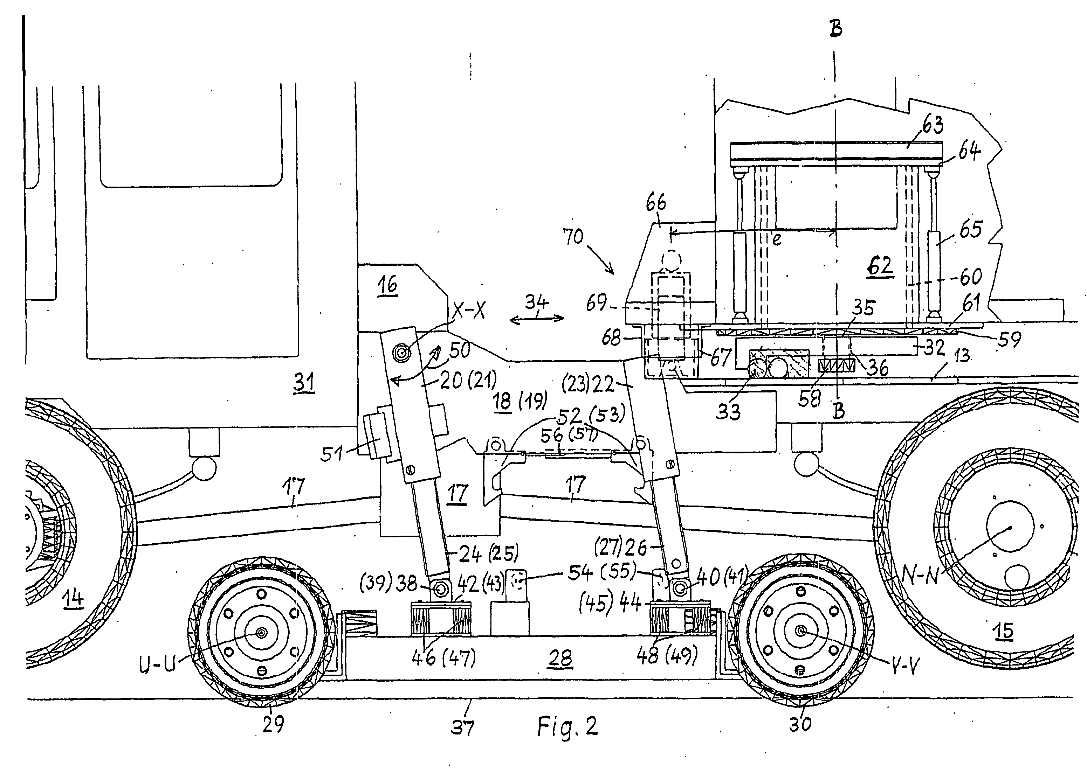

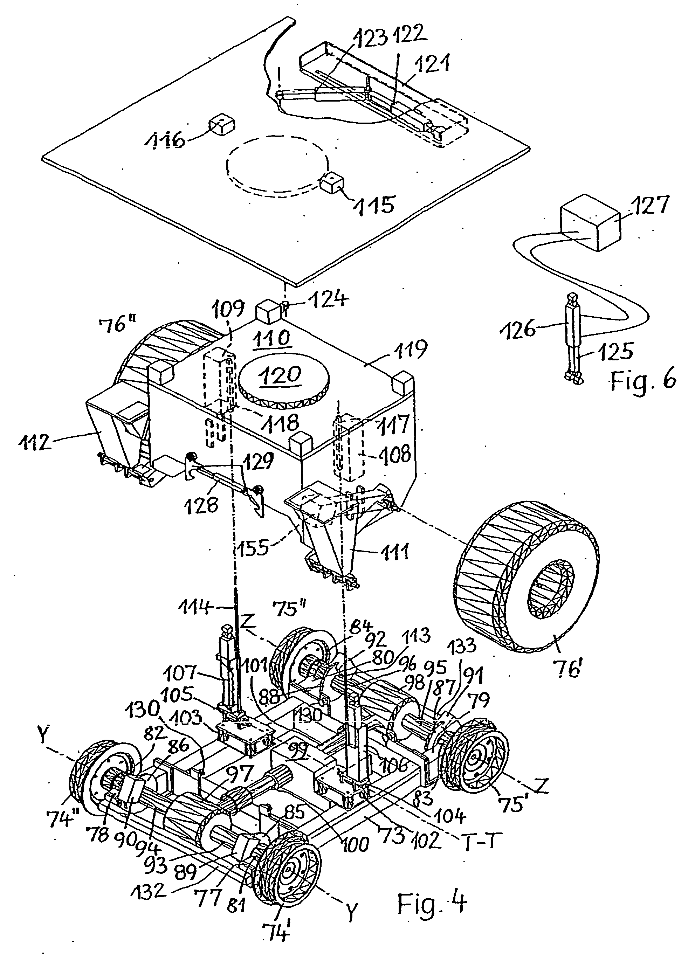

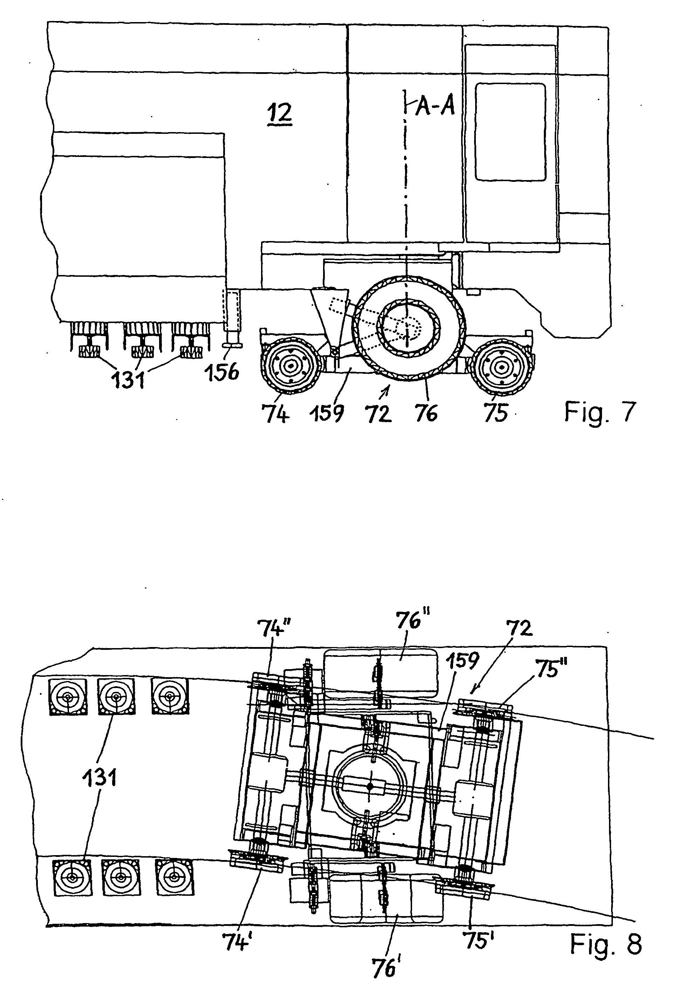

In den Figuren 1 und 2 ist ein Zweiwegefahrzeug 10 mit einer Zugmaschine 11 und einem Auflieger 12 im eingegleisten Zustand dargestellt. Die Zugmaschine 11 weist unter einem Boden 13 ein an diesem befestigtes Fahrwerk mit zwei Straßenradpaaren 14, 15 auf, die beide von einem Motor 16 über Getriebemittel 17 antreibbar sind. Am Zugmaschinenboden bzw. Zugmaschinenrahmen 13 sind ferner zwei in Fahrtrichtung verlaufende Traversen 18, 19 vorgesehen, mit denen Führungskörper 20, 21, 22, 23 verbunden sind, welche auf in Fahrtrichtung nach vom geneigten Führungen 24, 25, 26, 27 gleiten. Diese Führungen sind an ein Schienenradgestell 28 für zwei Schienenradpaare 29, 30 angelenkt, die auf einem Schienenpaar 37 abrollen und deren Radachsen U-U, V-V parallel zu den Radachsen M-M, N-N der Straßenradpaare 14, 15 gerichtet sind. Von den Radpaaren, Führungen und Führungskörpern sind nur die vorderen Teile sichtbar, sie verdecken die hinteren Teile, deren Bezugszeichen deshalb in der Zeichnung in Klammern gesetzt sind; diese Regelung gilt auch für andere verdeckte Bauteile in allen Figuren.
Der Anlenkung der Führungen 24 bis 27 an das Schienenradgestell 28 dienen zu den Radachsen U-U, V-V im wesentlichen parallel gerichtete Zapfen 38, 39, 40, 41, die auf Lagerplatten 42, 43, 44, 45 gelagert sind. Letztere sind auf dem Schienenradgestell 28 über dämpfende Elemente 46, 47, 48, 49 angebracht. Die Traversen 18, 19 sind an dem Führungspaar 24, 25 um eine gemeinsame, zu den Radachsen im wesentlichen parallele Achse X-X in Richtung eines Doppelpfeiles 50 schwenkbar gelagert und in einer gewünschten Lage mit Hilfe von Feststellmitteln 51 arretierbar.
Die Führungskörper 20 bis 23 befinden sich in den Figuren 1 und 2 in ihrer oberen Endlage, in der die Schienenradpaare 29, 30 auf den Schienen 37 aufsitzen und die Straßenradpaare 14, 15 abgehoben sind. In der nicht dargestellten unteren Endlage sitzen die Straßenräderpaare 14, 15 auf der Straße auf und die Schienenräderpaare 29, 30 sind abgehoben. In dieser Lage sind die Führungskörper 20 bis 23 über paarweise angeordnete Haken 52, 53 und Bolzen 54, 55 mit dem Schienenradgestell 28 verriegelt, wobei die Haken 52, 53 an den Traversen 18, 19 und die Bolzen 54, 55 am Schienenradgestell 28 angeordnet sind. Der Betätigung der Hakenpaare 52, 53 zur Ent- und Verriegelung dienen mit einem Fluid gefüllte Kolben-Zylinder-Kombinationen 56, 57, die mittels einer Steuereinheit steuerbar sind (Fig. 6).
Auf dem Zugmaschinenboden 13 befinden sich in fester Verbindung mit diesem ein Fahrerhaus 31 sowie eine Sattelplatte 32, deren Verankerungsstelle 33 am Zugmaschinenboden 13 in Fahrtrichtung 34, parallel zur Zeichenebene der Figuren 1 und 2, verstellbar ist. Mittig auf der Sattelplatte 32 ist der Auflieger 12 mit einem Bolzen 35 an seinem vorderen Ende in einer Lagerschale 36 der Sattelplatte 32 um eine Achse B-B schwenkbar gelagert, deren Verlängerung hinter der rechtwinklig zur Zeichenebene der Fig. 1 gerichteten Drehachse V-V des Schienenradpaares 30 liegt. Ein Sicherungsstück 58 verhindert ein unbeabsichtigtes Herausgleiten des Bolzens 35 aus der Lagerschale 36. Der Bolzen 35 ist mittig an einer Basis 59 eines Sattelkastens 60 befestigt, der in einer mit einer Aufliegergrundplatte 61 starr verbundenen Kastenführung 62 gleitend gelagert ist. Am oberen Ende des Sattelkastens 60 ist mit diesem eine mit Versteifungselementen 63 versehene Trägerplatte 64 starr verbunden, die über mindestens drei fluidische Kolben-Zylinder-Kombinationen 65 parallel zur Achse B-B höhenverstellbar ist. Durch diese Höhenverstellung ist die Aufliegergrundplatte 61 über einem Gleis 37 waagerecht positionierbar, sobald die Schienenradgestelle 28 ausgefahren, die Schienenräder 29, 30 wirksam geworden und die Straßenräder 14, 15 abgehoben sind. Die Fluid-Kolben-Zylinder-Kombinationen 65 sind vorzugsweise mit Lasthalteventilen ausgestattet, so dass der Sattelkasten 60 gegenüber der Kastenführung 62 und damit der Bolzen 35 gegenüber der Aufliegergrundplatte 61 in jeder möglichen Lage innerhalb des Verstellbereichs stabil gehalten werden kann. Auch kann die Kastenführung 62 innen mit vertikalen Laufbahnen für den Sattelkasten 60 versehen sein und dadurch die Reibung zwischen Sattelkasten 60 und Kastenführung 62 minimiert werden. Schließlich kann der Sattelbolzen 35 durch eine Kugelschale ersetzt werden, wobei die Sattelplatte 32 mit einem Kugelkopf versehen sein muss.
Am zugmaschinenseitigen Ende des Aufliegers 12 ist außerdem in einem Abstand e vor der Achse B-B mindestens ein (vorzugsweise zwei) sogenannter Nickstabilisator 70 angeordnet, der im wesentlichen aus einem Stabilisatorgehäuse 66, einem Stütztopf 67, einem Topfsockel 68 und einer Fluid-Kolben-Zylinder-Kombination 69 besteht. Das Stabilisatorgehäuse 66 ist starr am Auflieger 12 angebracht und besitzt unten eine Öffnung, um die herum der Topfsockel 68 an das Stabilisatorgehäuse 66 angeflanscht ist. Im Topfsockel 68 wird der Stütztopf 67 vertikal geführt, so dass auf die einerseits mit dem Stabilisatorgehäuse 66 und andererseits mit dem Stütztopf 67 gelenkig verbundene Fluid-Kolben-Zylinder-Kombination 69 keine Biegekräfte einwirken können. Der Stütztopf 67 stützt sich gegen den Boden 13 der Zugmaschine 11 ab und gleitet bei Schwenkung des Aufliegers 12 um die Achse B-B auf diesem Boden. Die Fluid-Kolben-Zylinder-Kombination 69 ist kontinuierlich höhenverstellbar und kann mit einer Sticktoffblase vorgespannt sein. Die auf pneumatischer oder hydraulischer Basis wirkende Kombination 69 kann auch mit Luft vorgespannt werden. In der Darstellung sind die Fluid-Kolben-Zylinder-Kombination 69 sowie ihre Anlenkungen an das Stabilisatorgehäuse 66 und den Stütztopf 67 ganz und der Stütztopf 67 durch das Stabilisatorgehäuse 66 und den Topfsockel 68 ganz bzw. teilweise verdeckt gezeichnet.
Wird das Zweiwegefahrzeug 10 in Fahrtrichtung beschleunigt oder verzögert, so hält der Nickstabilisator mit der entsprechenden Vorspannkraft das gesamte Fahrzeuggespann über den Hebel e um eine in der Nähe der flexiblen Verankerungsstelle 33 liegende Querachse stabil. Zusätzlich presst sich der Stütztopf 67 so auf dem Boden 13 ab, dass infolge der auftretenden Beschleunigung zwischen Stütztopf 67 und Boden 13 eine Haftreibung entsteht, wodurch keine weitere Einlenkung (Übersteuerung) durch die große Fahrzeugmasse um die Achse B-B erfolgen kann. Das gilt besonders beim Bewegen des eingegleisten Zweiwegefahrzeugs 10 in Gleisbögen.
Mit seinem hinteren, eine Führerkabine 71 umfassenden Ende ist der Auflieger 12 auf einem Fahrgestell 72 angeordnet, das ein Grundgestell 73 umfasst, an dem zwei Schienenradpaare 74, 75 und ein Straßenradpaar 76 um Drehachsen Y-Y, Z-Z und S-S drehbar gelagert sind. Das gesamte Fahrgestell 72 ist um eine Achse A-A um mindestens 90° gegenüber dem Auflieger 12 verdrehbar. Der Aufbau des gesamten Fahrgestells 72 wird zu Fig. 4 beschrieben.

Aus Fig. 1 ist deutlich erkennbar, dass zwischen der Zugmaschine 11 und dem Fahrgestell 72 des Aufliegers 12 ein erheblicher Raum für Arbeitsgeräte, im Beispiel für Schleifmodule 131 zur Verfügung steht

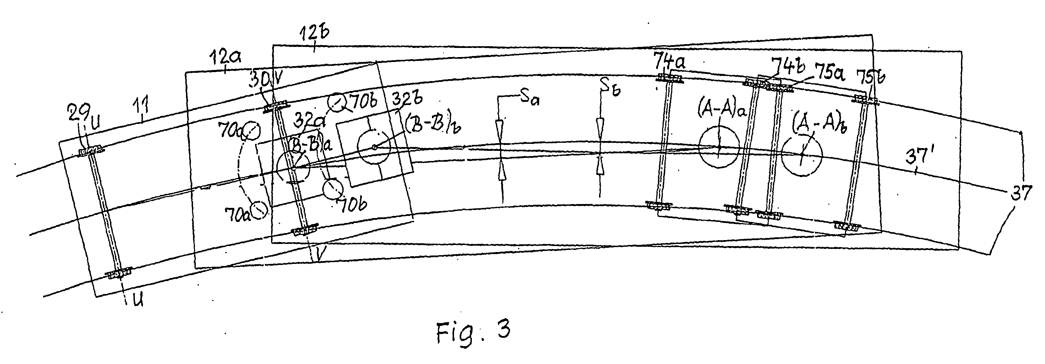

In Fig. 3 ist ein Schienenpaar 37 mit einer Gleismitte 37' dargestellt, auf dem sich eine durch ihre Schienenradpaare 29, 30 markierte Zugmaschine 11 und ein durch seine Schienenradpaare 74, 75 in zwei Stellungen 74a, 75a und 74b, 75b markierter Auflieger 12a und 12b befinden. Dem entsprechend befinden sich die Sattelplatte 32 und die Nickstabilisatoren 70 in den Positionen 32a, 32b und 70a, 70b. Die zugehörigen, im wesentlichen vertikalen Schwenkachsen A-A und B-B gelangen aus den Lagen (A-A)a bzw. (B-B)a in die Lagen (A-A)b bzw. (B-B)b. Es ist deutlich erkennbar, dass der jeweils zugehörige Sekantenversatz Sa größer ist als Sb. Je weiter also die vertikale Schwenkachse B-B hinter der im wesentlichen horizontalen Drehachse V-V des Schienenräderpaares 30 liegt, desto geringer ist der zugehörige Versatz der Sekante. Diese zunächst für die Gleismitte 37' abgeleitete Tatsache gilt für die einzelnen Schienen 37. Das bedeutet aber, dass sich die nicht dargestellten, den Schienen 37 zugeordneten Werkzeuge in den Lagen b der Schwenkachsen A-A und B-B seitlich weniger von den Schienen 37 entfernen. Damit ist die Bearbeitung von Gleisbögen mit größeren Krümmungen und/oder es sind größere Längen der Werkzeugaggregate unter dem Auflieger 12 möglich.

Das Fahrgestell 72 des Aufliegers 12 weist nach Fig. 4 am aus einem Kastenrohrrahmen bestehenden Grundgestell 73 Lagerböcke 77, 78, 79, 80, die parallel zu den Drehachsen Y-Y und Z-Z zu Anpassungszwecken verstellbar sind. Die Lagerböcke 77, 78 bzw. 79, 80 sind an ihren freien Seiten durch stabilisierende Glieder 132 bzw. 133 miteinander verbunden. In den Lagerböcken 77 bis 80 sind die Schienenräder 74', 74", 75', 75" mit ihren Achsstummeln 81, 82, 83, 84 gelagert, die an den freien Stummelenden mit Bremsscheiben 85, 86, 87, 88 versehen sind, welche mit gerätefest angeordneten Bremsklötzen 89, 90, 91, 92 zusammenwirken können. Anstatt der Bremsscheiben können auch Bremstrommeln Verwendung finden. Starre oder kardanische Wellen 93, 94, 95, 96 enden, aus Differenzialgetrieben 97, 98 kommend an den entsprechenden Bremsscheiben 85 bis 88 und übertragen die von einem Motor, vorzugsweise einem Hydraulikmotor 99, über Kardanwellen 100, 101 zu den Differenzialgetrieben 97, 98 gelangenden Drehmomente auf die Achsstummel 81 bis 84 der Schienenräder.
Über Dämpfungselemente 102, 103 sind mit dem Grundgestell 73 Achslager 104, 105 starr verbunden, in denen Führungen 106, 107 um eine zu den Achsen Y-Y und Z-Z parallele Achse T-T in Ebenen schwenkbar gelagert sind, die zu den Ebenen der Räder 74', 75' bzw. 74". 75" parallel gerichtet sind. Entlang den Führungen 106, 107 sind kastenförmige Führungsstücke 108, 109 verschiebbar, die mit einem Trägergestell 110 starr verbunden sind, an dem mit Hilfe von sogenannten Innenladerachsen 111, 112 die Straßenräder 76' und 76" mindestens eines Straßenräderpaares geringfügig vertikal verstellbar und mittels verdeckt gezeichneter, beidseitiger Luftfederungen 155, von denen nur eine sichtbar ist, gedämpf gelagert sind. Zusätzlich zu den Führungen 106, 107 sind zu deren Stabilisierung Stäbe 113, 114 vorgesehen, die durch Führungskanäle 117, 118 im Trägergestell 110 in entsprechende Löcher 115, 116 mit verstärkten Umrandungen in der Aufliegergrundplatte 61 hineinragen. Das Trägergestell 110 ist in der Nähe der und parallel zur Aufliegergrundplatte 61 mit einer Tragplatte 119 für einen fest mit ihr verbundenen Drehkranz 120 und vier den Drehkranz 120 entlastenden Gleitböcken versehen.
An der Aufliegergrundplatte 61 ist ein Gehäuse 121 befestigt, in dem sich ein linear und quer zur Fahrtrichtung wirkender hydraulischer oder pneumatischer Antrieb (mit Zylinder und Kolben) 122 befindet. Ein gleicher Antrieb 123 ist einerseits an das bewegliche Ende des Antriebs 122 und andererseits an einen an der Tragplatte 119 befestigten Bolzen 124 angelenkt. Mit Hilfe der Antriebe 122, 123 und des Drehkranzes 120 kann das gesamte Fahrgestell 72 um mindestens 90° um die Achse A-A verdreht werden.
Dabei wird gemäß Fig. 6 jeder aus Kolben 125 und Zylinder 126 bestehende hydraulische oder pneumatische Antrieb durch ein Steuergerät 127 so gesteuert, dass der Kolben 125 gegenüber dem Zylinder 126 die gewünschte Stellung einnimmt. Das gilt auch für andere hydraulische oder pneumatische Verstellungen, insbesondere die Betätigung der Sicherungshaken und der Führungskörper.

Durch die Möglichkeit der Verdrehung des Fahrgestells 72 um mindestens 90° wird der Vorgang des Eingleisens, insbesondere bei wenig zur Verfügung stehendem Platz, bspw. an Bahnübergängen, erheblich vereinfacht. Des weiteren wird durch die besondere Ausführung der vertikalen Verschiebbarkeit und Verdrehung der Drehgestellachse viel Platz für Arbeitsaggregate gewonnen.
Am Trägergestell 110 sind in Fahrtrichtung vom und hinten durch ein Fluidgetriebe 128 betätigbare Sicherungshakenpaare 129 vorgesehen, von denen nur das vordere sichtbar ist; diese arbeiten mit am Grundgestell 73 befestigten Sicherungsbolzen 130 zusammen. Sie halten das Trägergestell 110 in der eingefahrenen Lage, in der es sich dem Grundgestell 73 am nächsten befindet. In Fig. 4 ist die ausgefahrene Lage dargestellt, in der gemäß den Figuren 1 und 2 sich die Schienenräderpaare 74, 75 auf den Schienen 37 befinden und die Straßenräder 76' und 76" ausgehoben sind.

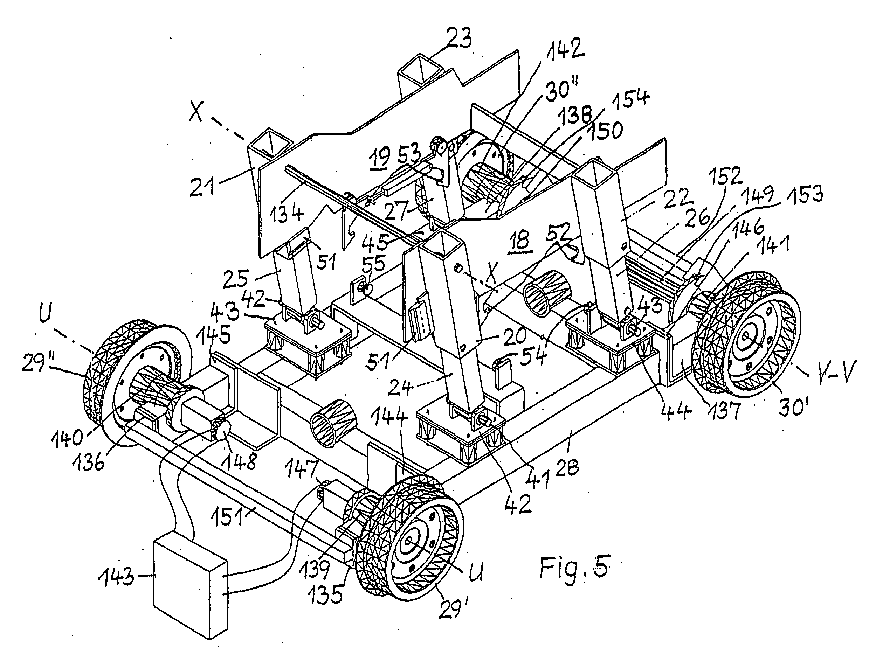

Die Darstellung der Fig. 5 lässt deutlich das Schienenradgestell 28 der Zugmaschine 11 erkennen. Die Führungen 24, 25, 26, 27 für die Führungskörper 20, 21, 22, 23 sind auf den Lagerplatten 42, 43, 44, 45 um Zapfen 38, 39, 40, 41 (nicht sichtbar) schwenkbar gelagert. In ihrer dem Schienenradgestell 28 nahen Lage sind die durch Traversen 18, 19 miteinander verbundenen Führungen 24, 26 und 25, 27 mit Sicherungshakenpaaren 52, 53 und am Schienenradgestell 28 befestigten Bolzenpaaren 54, 55 (nur ein Bolzen sichtbar) fixiert. Die Traversen 18, 19 sind durch eine in den Führungskörpern 20, 21 gelagerte Welle 134 miteinander verbunden und gemeinsam um die Achse X-X schwenkbar. Die Schienenräder 29', 29", 30', 30" sind in Lagerböcken 135, 136, 137, 138 mit Achsstummeln 139, 140, 141, 142 drehbar gelagert und werden durch schematisch dargestellte Antriebsmittel 143 gemeinsam angetrieben. Der Abbremsung dienen Scheibenbremsen 153, 154. Die Lagerböcke 135 bis 138 sind parallel zu den Drehachsen U-U und V-V der Radpaare 29, 30 mit Hilfe von Schlitten, von denen nur die Schlitten 144, 145, 146 sichtbar sind, am Schienenradgestell 28 gegenläufig verstellbar. Entsprechend sind die zu den Rädern 29', 29", 30', 30" führenden Wellen 147, 148, 149, 150 auswechselbar oder verstellbar. Der Sicherung einer stabilen Lagerung der Radpaare 29, 30 dienen die an den freien Seiten der Lagerböcke 135 bis 138 befestigten Streben 151, 152. Im übrigen wird auf die Ausführungen zu den Figuren 1 und 2 verwiesen.

Beim Eingleisen des erfindungsgemäßen Zweiwegefahrzeugs 10 werden zunächst die Schienenräderpaare 74, 75 eingegleist, wobei das Fahrgestell 72 mit Hilfe der Antriebe 122, 123 eine die erforderliche Drehung um die Achse A-A erfährt. Anschließend wird die Zugmaschine 11 so über dem Gleis 37 positioniert, dass ihr hinteres Schienenräderpaar 30 zuerst durch die Schienen 37 geführt wird. Demzufolge werden die hinteren Führungskörper 22, 23 zuerst ausgefahren, nachdem das Schienenradgestell 28 aus der Arretierungsstellung gehoben und etwas abgesenkt wurde. Dabei verschwenken sich die vorderen Führungskörper 20, 21 zwangsläufig um die Achse X-X. Danach wird durch Rückwärtsfahren auf dem Gleis 37 das vordere Schienenräderpaar 29 so in Position gebracht, dass sie ebenfalls Schienenkontakt bekommen können. Nach dieser Einrichtung der Zugmaschine 11 auf dem Gleis 37 wird das vordere Schienenradpaar 29 bis zum Schienenkontakt ausgefahren. Dabei gleiten die Führungskörper 20, 21 auf den Führungen 24, 25 in die obere, vom Schienenradgestell 28 entfernte Lage, die Führungskörper 20, 21 werden um die Achse X-X zurückgeschwenkt und untere und vordere Feststellmittel 51 werden automatisch wirksam. Anschließend wird die Zugmaschine 11 insgesamt mit Hilfe einer auf die Führungskörper 20 bis 23 wirkenden, nicht dargestellten Hydrauliksteuerung analog zu Fig. 6 so ausgehoben, dass die Straßenradpaare 14, 15 einen definierten Höhenabstand zum Gleis 37 erhalten.

In den Figuren 7 und 8 ist am Auflieger 12 mit den Schleifmodulen 131 und dem Fahrgestell 72 das Straßenradpaar 76 nicht um die vertikale Achse A-A schwenkbar gelagert. In diesem Fall ist eine ebenfalls paarweise angeordnete Hydraulik-Hebevorrichtung 156 vorgsehen, die auf die Straßenoberfläche zum Ausheben des Aufliegers 12 absenkbar ist. Auf diese Weise sind bei einem nicht waagerechten Auf- und/oder Abgleisvorgang die Schienenradpaare 74, 75 mit einem Grundgestell 159 unter dem Straßenradpaar 76 durchschwenkbar.

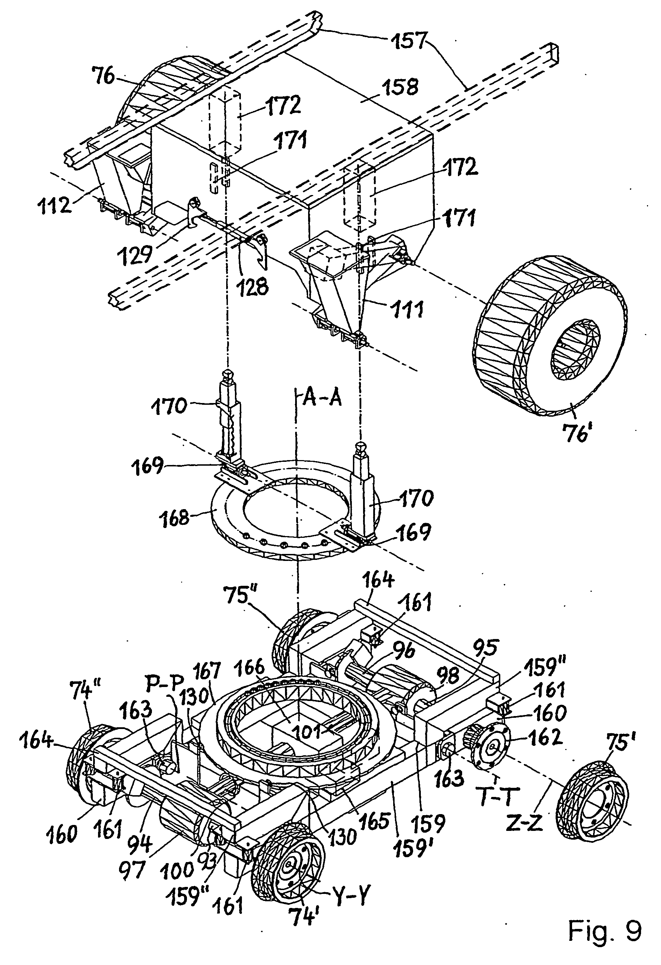

In Fig. 9 ist an einem Grundgestell 159 mit einem tief liegenden Mittelteil 159' und hoch liegenden Außenteilen 159" für jedes der Schienenräder 74', 74", 75', 75" ein Achsschenkel 160 an einem seiner Enden um eine Achse P-P bzw. T-T schwenkbar gelagert, die im wesentlichen parallel zu den Y-Y und Z-Z der Schienenräder gerichtet ist. Die Schwenkungen der Achsschenkel 160 werden durch Dämpfungsmittel (Federdämpfungen) 161 gedämpft, die an den Außenteilen 159" und den Achsschenkeln 160 angeordnet sind und zwischen diesen wirken. Die Dämpfungsmittel 161 befinden sich vorzugsweise an den achsfreien Enden der Achsschenkel 160 und die Radlager mit ihren Radaufuahmen 162 der Schienenräder 74', 74", 75', 75" zwischen der jeweiligen, durch einen Schwenkbolzen 163 festgelegten Schwenkachse P-P bzw. T-T und dem achsfreien Ende jedes Schwenkhebels 160. Der Stabilisierung des Grundgestells 159 dienen Streben 164.
Am Grundgestell 159 ist ein Hydraulikmotor 165 angeordnet, der über ein Verteilergetriebe 166, Kardanwellen 100 und 101 Differenzialgetriebe 97 und 98 und Kardanwellen 93, 94, 95, 96 entsprechend die Räder 74', 74", 75', 75" antreibt. Mit dem tief liegenden Mittelteil 159' des Grundgestells 159 ist ein Drehkranzunterteil 167 fest verbunden, in dem ein Drehkranzoberteil 168 um die im wesentlichen vertikale Achse A-A drehbar gelagert ist. Am Drehkranzoberteil 168 sind mit Hilfe von Schwenkbolzen 169 paarweise angeordnete Führungsteile 170 schwenkbar gelagert, die in Führungsschienen 171 und Führungskästen 172 gleiten. Die Bewegung der Führungsteile 170 in den Führungskästen 172 kann, wie zu Fig. 4 beschrieben, hydraulisch erfolgen. Mit einem angedeuteten Längsrahmen 157 des Aufliegers 12 (Fig.7) ist ein Achsträgergestell 158 als Träger für die Innenladerachsen 111 und 112 der Straßenräder 76' und 76" fest verbunden. Durch ein Fluidgetriebe 128 betätigbare Sicherungshaken 129 arbeiten mit am Grundgestell 159 vorgesehenen Sicherungsbolzen 130 zusammen und halten das Achsträgergestell 158 in der dem Grundgestell 159 am nächsten kommenden Lage.
Durch die in den Figuren 7 bis 9 dargestellte Anordnung wird einerseits die Drehgestellstabilität und Kraftschlüssigkeit der Schienenräder erhöht und andererseits die Wirkung des Dämpfungssystems verbessert. Die in den Figuren 7 - 9 dargestellte Achsaufhängung kann auch bei der Zugmaschine zur Anwendung kommen.
Die in Fig. 2 vorgesehene Schwenkung der Führungskörper 20, 21 um die Achse X-X kann in Wegfall kommen, wenn die Straßenradpaare 14 und 15 wechselseitig liftbar sind.
Alle in der Beschreibung, den nachfolgenden Ansprüchen und der Zeichnung dargestellten Merkmale können sowohl einzeln als auch in beliebiger Kombination miteinander erfindungswesentlich sein.

### Bezugszeichenliste

- 10: Zweiwegefahrzeug
- 11: Zugmaschine
- 12: Auflieger
- 12a, 12b: Aufliegerpositionen
- 13: Boden
- 14,15,76: Straßenradpaare
- 16: Motor
- 17: Getriebemittel
- 18, 19: Traversen
- 20,21,22,23: Führungskörper
- 24, 25, 26, 27, 106, 107: Führungen
- 28: Schienenradgestell
- 29,30,74,75: Schienenradpaare
- 29', 29", 30',30", 74', 74", 75', 75": Schienenräder
- 31: Fahrerhaus
- 32: Sattelplatte
- 32a, 32b: Sattelplattenpositionen
- 33: Verankerungsstelle
- 34: Fahrtrichtung
- 35: Bolzen
- 36: Lagerschale
- 37: Gleis (Schien-paar)
- 37': Gleismitte
- 38,39,40,41: Zapfen
- 42, 43, 44, 45: Lagerplatten
- 46, 47, 48, 49, 102, 103: dämpfende Elemente
- 50: Pfeil
- 51: Feststellmittel
- 52, 53: Haken
- 54, 55, 124: Bolzen
- 56, 57, 65, 69: Kolben-Zylinder-Kombinationen
- 58: Sicherungsstück
- 59: Basis
- 60: Sattelkasten
- 61: Aufliegergrundplatte
- 62: Kastenführung
- 63: Versteifungselemente
- 64: Trägerplatte
- 66: Stabilisatorgehäuse
- 67: Stütztopf
- 68: Topfsockel
- 70: Nickstabilisator
- 70a, 70b: Nickstabilisatorpositionen
- 71: Führerkabine
- 72: Fahrgestell
- 73, 159: Grundgestell
- 74a, 74b, 75a, 75b: Schienenradpaarpositionen
- 76', 76": Straßenräder
- 77, 78, 79,80: Lagerböcke
- 81,82,83,84: Achsstummel
- 85, 86, 87, 88: Bremsscheiben
- 89, 90, 91, 92: Bremsklötze
- 93, 94, 95, 96: Wellen
- 97, 98: Differenzialgetriebe
- 99: Hydraulikmotor
- 100,101: Kardanwellen
- 104, 105: Achslager
- 108, 109: Führungsstücke
- 110: Trägergestell
- 111, 112: Innenladerachsen
- 113, 114: Stäbe
- 115, 116: Löcher
- 117, 118: Führungskanäle
- 119: Tragplatte
- 120: Drehkranz
- 121: Gehäuse
- 122, 123: Antriebe
- 125: Kolben
- 126: Zylinder
- 127: Steuergerät
- 128: Fluidgetriebe
- 129: Sicherungshakenpaare
- 130: Sicherungsbolzen
- 131: Schleifmodule
- 132, 133: stabilisierende Glieder
- 134, 147, 148, 149, 150: Wellen
- 135, 136, 137, 138: Lagerböcke
- 139, 140, 141, 142: Achsstummel
- 143: Antriebsmittel
- 144, 145, 146: Schlitten
- 151, 152: Streben
- 153, 154: Scheibenbremsen
- 155: Luftfederungen
- 156: Hydraulik-Hebevorrichtung
- 157: Längsrahmen
- 158: Achsträgergestell
- 159': Mittelteil
- 159": Außenteile
- 160: Achsschenkel
- 161: Dämpfungsmittel
- 162: Radaufnahmen
- 163: Schwenkbolzen
- 164: Streben
- 165: Hydraulikmotor
- 166: Verteilergetriebe
- 167: Drehkranzunterteil
- 168: Drehkranzoberteil
- 169: Schwenkbolzen
- 170: Führungsteile
- 171: Führungsschienen
- 172: Führungskästen
- A-A, B-B, M-M, N-N, P-P, S-S, T-T, U-U, V-V, X-X, Y-Y, Z-Z: Achsen
- (A-A)a, (A-A)b, (B-B)a, (B-B)b: Achslagen

## Patentansprüche

1. Zweiwegefahrzeug (10) zur Durchführung von Gleisoberbauarbeiten mit einem Arbeitswagen (12) und einer Zugmaschine (11), die ein vorderes (14) und ein hinteres (15) Straßenradpaar aufweist, **dadurch gekennzeichnet, dass** die Zugmaschine (11) auch ein vorderes (29) und ein hinteres (30) Schienenradpaar aufweist und der als Auflieger (12) auf einem an der Zugmaschine (11) befindlichen Sattel (32) ausgebildete Arbeitswagen (12) mit der Zugmaschine (11) beim Straßentransport und bei der Durchführung der Gleisoberbauarbeiten eine Einheit bildet.

2. Zweiwegefahrzeug gemäß Anspruch 1, **dadurch gekennzeichnet, dass** die Aufsattelstelle (35) des Aufliegers (12) an der Zugmaschine (11) sich über oder hinter der Schienenrad-Hinterachse (V-V) der Zugmaschine (11) befindet.

3. Zweiwegefahrzeug gemäß Anspruch 1, **dadurch gekennzeichnet, dass** die zueinander parallelen Hinterachsen des Aufliegers (12) für Schienen- und Straßenräder gemeinsam oder getrennt um eine im wesentlichen vertikale Achse schwenkbar und in der Höhe gegeneinander verstellbar angeordnet sind.

4. Zweiwegefahrzeug gemäß Anspruch 3, **dadurch gekennzeichnet, dass** alle Hinterachsen des Aufliegers an einem Grundgestell gelagert sind, das gegenüber dem Auflieger um die im wesentlichen vertikale Achse verdrehbar gelagert ist.

5. Zweiwegefahrzeug gemäß Anspruch 4, **dadurch gekennzeichnet, dass** am Grundgestell wenigstens annähernd vertikal gerichtete Führungen angeordnet sind, entlang deren ein Trägergestell verstellbar ist, und dass an einem dieser Gestelle die Lager für die Schienenräder und am anderen dieser Gestelle die Lager für die Straßenräder vorgesehen sind.

6. Zweiwegefahrzeug gemäß Anspruch 5, **dadurch gekennzeichnet, dass** die wenigstens annähernd vertikal gerichteten Führungen um Achsen schwenkbar gelagert sind, die wenigstens annähernd parallel zu den Hinterachsen des Aufliegers gerichtet sind.

7. Zweiwegefahrzeug gemäß Anspruch 6, **dadurch gekennzeichnet, dass** die Schwenklager der wenigstens annähernd vertikal gerichteten Führungen über schwingungsdämpfende Mittel am Grundgestell befestigt sind.

8. Zweiwegefahrzeug gemäß Anspruch 7, **dadurch gekennzeichnet, dass** am Grundgestell zwei Schienenräderpaare und am Trägergestell ein Straßenräderpaar gelagert sind.

9. Zweiwegefahrzeug gemäß Anspruch 8, **dadurch gekennzeichnet, dass** das Straßenräderpaar über Innenladerachsen am Trägergestell befestigt ist.

10. Zweiwegefahrzeug gemäß Anspruch 5, **gekennzeichnet durch** Verriegelungsmittel, mit denen das Trägergestell in seiner dem Grundgestell am nächsten kommenden Lage arretierbar ist.

11. Zweiwegefahrzeug gemäß Anspruch 8, **dadurch gekennzeichnet, dass** am Grundgestell Lagerkörper für die Schienenräderpaare tragende Wellen vorgesehen sind.

12. Zweiwegefahrzeug gemäß Anspruch 11, **dadurch gekennzeichnet, dass** der Abstand der Räder jedes Schienenräderpaares und entsprechend der Abstand der zugehörigen Lagerkörper am Grundgestell veränderbar ist.

13. Zweiwegefahrzeug gemäß Anspruch 12, **dadurch gekennzeichnet, dass** die Lagerkörper jedes Schienenräderpaares an ihren vom Grundgestell abliegenden Seiten durch einen Abstandshalter verbunden sind.

14. Zweiwegefahrzeug gemäß Anspruch 8, **dadurch gekennzeichnet, dass** am Grundgestell Antriebsmittel und Bewegungsübertragungsmittel zu den Schienenräderpaaren angeordnet sind.

15. Zweiwegefahrzeug gemäß Anspruch 1, **dadurch gekennzeichnet, dass** am Zugmaschinenboden zwischen dem vorderen und dem hinteren Straßenradpaar ein Schienenradgestell für zwei ebenfalls zwischen den am Zugmaschinenboden befestigten Straßenradpaaren befindliche Schienenradpaare vorgesehen ist, das vier zum Zugmaschinenboden gerichtete, zumindest annähernd parallele Führungen für vier mit dem Zugmaschinenboden verbundene Führungskörper aufweist, und dass Drehachsen aller genannten Radpaare parallel zueinander gerichtet sind.

16. Zweiwegefahrzeug gemäß Anspruch 15, **dadurch gekennzeichnet, dass** die zum Zugmaschinenboden gerichteten Führungen in Ebenen nach vorn geneigt sind, welche zumindest annähernd parallel zu den Radebenen und rechtwinklig zu den Radachsen gerichtet sind.

17. Zweiwegefahrzeug gemäß Anspruch 16, **dadurch gekennzeichnet, dass** die zum Boden der Zugmaschine gerichteten Führungen in Ebenen schwenkbar gelagert sind, welche zumindest annähernd parallel zu den Radebenen und rechtinklig zu den Radachsen gerichtet sind.

18. Zweiwegefahrzeug gemäß Anspruch 17, **dadurch gekennzeichnet, dass** die vorderen, mit dem Zugmaschinenboden verbundenen Führungskörper um eine zu den Radachsen zumindest angenähert parallele, über dem Schienenradgestell befindliche Achse parallel zu den Radebenen schwenkbar gelagert sind.

19. Zweiwegefahrzeug gemäß Anspruch 18, **dadurch gekennzeichnet, dass** die zum Zugmaschinenboden gerichteten Führungen am Schienenradgestell unter Zwischenschaltung von Dämpfungsmitteln gelagert sind.

20. Zweiwegefahrzeug gemäß Anspruch 19, **dadurch gekennzeichnet, dass** jeweils zwei auf derselben Seite des Schienenradgestells angeordnete Führungskörper durch Traversen verbunden sind, die parallel zu den Radebenen gerichtet sind und deren Verbindung von den vorderen oder hinteren Führungskörpern lösbar gestaltet ist.

21. Zweiwegefahrzeug gemäß Anspruch 15, **gekennzeichnet durch** Verriegelungsmittel, die bestrebt sind, die Führungskörper in ihrer unteren Lage nahe dem Schienenradgestell zu halten.

22. Zweiwegefahrzeug gemäß den Ansprüchen 5 und 15, **dadurch gekennzeichnet, dass** der Abstand der Räder jedes Schienenräderpaares veränderbar ist.

23. Zweiwegefahrzeug gemäß den Ansprüchen 5 und 15, **dadurch gekennzeichnet, dass** den Rädern der Schienenradpaare Bremsmittel zugeordnet sind.

24. Zweiwegefahrzeug gemäß Anspruch 2, **dadurch gekennzeichnet, dass** der Auflieger an und bezüglich der Aufsattelstelle höhenverstellbar angeordnet ist.

25. Zweiwegefahrzeug gemäß Anspruch 2, **dadurch gekennzeichnet, dass** am vorderen Ende des Aufliegers, in der Nähe der Sattelstelle, Stabilisatoren vorgesehen sind, die ein Nicken dieses Aufliegerendes weitestgehend verhindern.

26. Zweiwegefahrzeug gemäß mindestens einem der Ansprüche 3, 5, 15, 24, 25 **dadurch gekennzeichnet, dass** zur Schwenkung der Schienen - und Straßenräder um die vertikale Achse, zur Verschiebung der Führungsstücke entlang der Führungen und zur Betätigung der Rastmittel hydraulische oder pneumatische Getriebe und Getriebesteuerungen verwendet werden.

## Claims

1. Rail-road vehicle (10) used to perform superstructure works and provided with a work car (12) and a truck tractor (11) that is equipped with a front road wheel pair (14) and a rear road wheel pair (15), wherein the truck tractor (11) has also a front rail wheel pair (29) and a rear rail wheel pair (30) and the work car (12) in the design of a semitrailer (12), that is rested on a saddle (32) fixed at the truck tractor (11), forms a unit with the truck tractor (11) during road transport and superstructure works.

2. Rail-road vehicle according to claim 1, wherein the saddle-mount position (35) of the semitrailer (12) at the truck (11) is located above or behind the rear axis of the rail wheels (V-V) of the truck tractor (11).

3. Rail-road vehicle according to claim 1, wherein the parallel running semitrailer (12) rear axes for the rail and road wheels are arranged in such a way that they can be pivoted together or separately around a mostly vertical axis and can be adjusted in height with respect to each other.

4. Rail-road vehicle according to claim 3, wherein all rear axes of the semitrailer are arranged at a basic support that can be pivoted with respect to the semitrailer around the mostly vertical axis.

5. Rail-road vehicle according to claim 4, wherein the basic support is provided with at least almost vertically oriented guide units along which a carrier support can be adjusted, whereby the bearings for the rail wheels are installed at one of these supports and the bearings for the road wheels are installed at the other support.

6. Rail-road vehicle according to claim 5, wherein the at least almost vertically oriented guide units can be pivoted around axes that are in an at least almost parallel position to the rear axes of the semitrailer.

7. Rail-road vehicle according to claim 6, wherein the swivel bearings of the at least almost vertically oriented guide units are fixed at the basic support with vibration-damping elements.

8. Rail-road vehicle according to claim 7, wherein two rail wheel pairs are arranged at the basic support and one road wheel pair is arranged at the carrier support.

9. Rail-road vehicle according to claim 8, wherein the road wheel pair is installed at the basic support via bearing systems.

10. Rail-road vehicle according to claim 5, wherein locking elements can lock the carrier support in its position that is the nearest one to the basic support.

11. Rail-road vehicle according to claim 8, wherein the basic support is provided with bearing boxes for the shafts carrying the rail wheel pairs.

12. Rail-road vehicle according to claim 11, wherein the distance of the wheels of each rail wheel pair and consequently the distance of the appropriate bearing boxes can be adjusted at the basic support.

13. Rail-road vehicle according to claim 12, wherein a distance element connects the bearing boxes of each rail wheel pair at their sides positioned away from the basic support.

14. Rail-road vehicle according to claim 8, wherein drive and motion transmission means to the rail wheel pairs are provided at the basic support.

15. Rail-road vehicle according to claim 1, wherein a rail wheel support is provided at the truck tractor bottom between the front and the rear road wheel pairs for two rail wheel pairs that are also located between the road wheel pairs fixed at the tractor bottom, whereby this rail wheel support is equipped with four almost parallel running guide units that are oriented towards the tractor bottom and used for four guiding elements fixed to the truck tractor bottom and that rotation axes of all wheel pairs mentioned are arranged in parallel position with respect to each other.

16. Rail-road vehicle according to claim 15, wherein the guide units oriented towards the truck tractor bottom are inclined forwards in levels that are aligned in at least almost parallel position to the wheel planes and in rectangular position to the wheel axes.

17. Rail-road vehicle according to claim 16, wherein the guide units oriented towards the truck bottom can be pivoted in levels that are at least almost parallel to the wheel planes and rectangular to the wheel axes.

18. Rail-road vehicle according to claim 17, wherein the front guide unit elements connected with the truck tractor bottom are arranged in such a way that they can be pivoted parallel to the wheel planes around an axis that is positioned at least almost parallel to the wheel axes and is located above the rail wheel support.

19. Rail-road vehicle according to claim 18, wherein the guide units oriented towards the truck tractor bottom are arranged with damping means at the rail wheel support.

20. Rail-road vehicle according to claim 19, wherein each pair of two guide unit elements positioned at the same side of the rail wheel support is connected by crossheads that are in parallel position to the wheel planes and can be disconnected from the front or rear guide unit elements.

21. Rail-road vehicle according to claim 15, wherein locking elements are provided to keep the guide unit elements in their lower position close to the rail wheel support.

22. Rail-road vehicle according to claims 5 and 15, wherein the distance of the wheels of each rail wheel pair can be adjusted.

23. Rail-road vehicle according to claims 5 and 15, wherein braking elements are provided for the wheels of the rail wheel pairs.

24. Rail-road vehicle according to claim 2, wherein the height of the semitrailer can be adjusted at and with regard to the saddle-mount position.

25. Rail-road vehicle according to claim 2, wherein stabilizers are installed at the front end of the semitrailer, close to the saddle-mount position, to ensure the minimum possible pitching of this semitrailer end.

26. Rail-road vehicle according to at least one of the claims 3, 5, 15, 24, 25, wherein hydraulic drives or pneumatic drives and transmission controls are used for swiveling the rail and road wheels around the vertical axis, for moving the guide unit elements along the guide units and for activating the locking elements.

## Revendications

1. Le véhicule rail-route (10) permettant d'effectuer des travaux sur la superstructure d'une voie ferrée à l'aide d'un chariot de travail (12) et d'un véhicule tracteur (11), équipé d'une paire des roues-route avant (14) et une paire de roues-route arrière (15), est **caractérisé en ce que** l'engin tracteur (11) est également doté de paires de roues-rail avant (29) et de paires de roues-rail (30) arrière et que le chariot de travail (12) conçu en forme de semi-remorque (12) reposant sur la sellette (32) de l'engin tracteur (11) forme avec celui-ci une unité aussi bien pour son transport sur la route que pour effectuer les travaux sur la superstructure de la voie ferrée.

2. Le véhicule rail-route suivant la revendication 1 est **caractérisé en ce que** le point d'accouplement (35) de la semi-remorque (12) sur l'engin tracteur (11) est situé au-dessus et derrière l'essieu arrière (V-V) des roues-rail de l'engin tracteur (11).

3. Le véhicule rail-route suivant la revendication 1 est **caractérisé en ce que** les essieux arrières des roues-rail et des roues-route de la semi-remorque (12) disposés de manière parallèle l'un par rapport à l'autre, sont, dans l'essentiel, amovibles, afin de pouvoir pivoter autour d'un axe vertical, et qu'ils sont réglables en hauteur l'un par rapport à l'autre.

4. Le véhicule rail-route suivant la revendication 3 est **caractérisé en ce que** tous les essieux arrières de la semi-remorque reposant sur un châssis de base sont logés de manière amovible pour pouvoir être tournés autour de l'axe vertical pour l'essentiel.

5. Le véhicule rail-route suivant la revendication 4 est **caractérisé en ce que** sur le châssis de base sont montés des dispositifs de guidage ayant une orientation essentiellement verticale, le long desquels sont disposés de manière réglable des bâtis supports, et que sur l'un d'eux sont montés les paliers pour les roues-rail et, sur l'autre, les paliers pour les roues-route.

6. Le véhicule rail-route suivant la revendication 5 est **caractérisé en ce que** les dispositifs de guidage disposés pour l'essentiel de manière verticale et pouvant pivoter autour des axes, lesquels sont essentiellement orientés de manière parallèle par rapport aux essieux arrières de la semi-remorque.

7. Le véhicule rail-route suivant la revendication 6 est **caractérisé en ce que** les paliers d'orientation des dispositifs de guidage orientés dans l'essentiel dans le sens vertical sont fixés sur le châssis de base aux moyens amortisseurs de vibrations.

8. Le véhicule rail-route selon la revendication 7 est **caractérisé en ce que** sur le châssis de base sont logées deux paires de roues-rail et sur le bâti support est logé une paire de roues-route.

9. Le véhicule rail-route suivant la revendication 8 est **caractérisé en ce que** la paire de roues-rail est fixée sur le bâti support au moyen d'un système d'axe.

10. Le véhicule rail-route suivant la revendication 5 est **caractérisé en ce que** ce dernier dispose de dispositifs de verrouillage permettant d'immobiliser le bâti support dans sa position la plus proche du châssis de base.

11. Le véhicule rail-route suivant la revendication 8 est **caractérisé en ce que** sur le châssis de base sont prévus des corps de paliers pour les arbres sur lesquels sont montées les paires de roues-rail.

12. Le véhicule rail-route suivant la revendication 11 est **caractérisé en ce que** la distance entre les roues de chacune des paires de roues-rail de même que,par conséquent, la distance entre les corps de paliers respectifs sur le châssis de base sont variables.

13. Le véhicule rail-route suivant la revendication 12 est **caractérisé en ce que** les corps de palier de chacune des paires de roues-rail sont reliés entre eux, sur le côté opposé du châssis de base, par des dispositifs écarteurs.

14. Le véhicule rail-route suivant la revendication 8 est **caractérisé en ce que** les mécanismes de commande et les organes de transmission des mouvements sont disposés sur le châssis de base en rapport avec les paires de roues-rail.

15. Le véhicule rail-route suivant la revendication 1 est **caractérisé en ce qu** un châssis roues-rail est placéau fond de l'engin tracteur entre la paire de roues avant et la paire de roues arrière afin de supporter deux paires de roues-rail situées entre les paires de roues-route montées également sur le fond de l'engin tracteur, ce châssis roues-rail étant de son côté doté de quatre dispositifs de guidage disposés de manière approximativement parallèle et orientés selon la direction du fond de l'engin tracteur pour les corps de guidages reliés également au fond de l'engin tracteur, et **en ce que** toutes les paires de roues citées sont orientées l'une par rapport à l'autre, de manière parallèle.

16. Le véhicule rail-route suivant la revendication 15 est **caractérisé en ce que** les dispositifs de guidage orientées en direction du fond de l'engin tracteur, sont montés de manière inclinée vers l'avant et de manière approximativement parallèle par rapport aux niveaux des roues et de manière perpendiculaire par rapport aux essieux des roues.

17. Le véhicule rail-route suivant la revendication 16 est **caractérisé en ce que** les dispositifs de guidage orientés selon la direction du fond de l'engin tracteur, sont montés de manière inclinée vers l'avant et sont disposés de manière de pouvoir pivoter au niveau des plans orientés de manière approximativement parallèle par rapport aux plans des roues et de manière perpendiculaire par rapport aux essieux des roues.

18. Le véhicule rail-route suivant la revendication 17 est **caractérisé en ce que** les corps de guidages avant, reliés avec le fond de l'engin tracteur sont disposés de manière amovible, pouvant ainsi pivoter autour d'un axe situé au-dessus du support roues-rail de manière approximativement parallèle par rapport au niveau des roues.

19. Le véhicule rail-route suivant la revendication 18 est **caractérisé en ce que** le montage des dispositifs de guidage disposés sur le châssis roues-rail et orientés en direction du fond de l'engin tracteur, prévoit la mise en place de moyens amortisseurs intermédiaires.

20. Le véhicule rail-route suivant la revendication 19 est **caractérisé en ce que** les deux corps de guidage disposés sur le même côté du châssis roue-rail sont reliés l'un à l'autre par des traverses orientées de manière parallèle par rapport aux niveaux des roues, la liaison entre les corps avant et arrière de guidage n'étant pas solidaire mais détachable.

21. Le véhicule rail-route suivant la revendication 15 est **caractérisé en ce qu'**il est doté de dispositifs de verrouillage ayant tendance à maintenir les corps de guidage dans leur position inférieure à proximité du châssis roues-rail.

22. Le véhicule rail-route suivant les revendications 5 et 15 est **caractérisé en ce que** la distance séparant les roues de chacune des paires de roues-rail est variable.

23. Le véhicule rail-route suivant les revendications 5 et 15 est **caractérisé en ce que** les roues des paires de roue-rail sont dotées de dispositifs de freinage.

24. Le véhicule rail-route suivant la revendication 2 est **caractérisé en ce que** la disposition de la semi-remorque permet un réglage en hauteur au point d'accouplement de la remorque.

25. Le véhicule rail-route suivant la revendication 2 est **caractérisé en ce que** sur l'extrémité avant de la semi-remorque, à proximité du point d'accouplement, sont prévus des stabilisateurs empêchant au maximum l'oscillation longitudinale.

26. Le véhicule rail-route suivant les revendications 3, 5, 15, 24, 25 est **caractérisé en ce que**, pour permettre le pivotement des roues-rail et des roues-route autour de l'axe vertical pour obtenir le déplacement des éléments de guidage le long des guidages, de même que pour la mise en action des dispositifs de verrouillage, il convient de prévoir des engrenages hydrauliques ou pneumatiques et des mécanismes de commande pour actionner les engrenages.
